Europäisches Patentamt

European Patent Office

Office européen des brevets

(19)

(11) **EP 0 617 359 B1**

(12) **FASCICULE DE BREVET EUROPEEN**

(45) Date de publication et mention
de la délivrance du brevet:
**30.06.1999 Bulletin 1999/26**

(51) Int Cl.⁶: **G06F 7/60**, G06G 7/26

(21) Numéro de dépôt: **94104481.0**

(22) Date de dépôt: **22.03.1994**

(54) **Contrôleur à logique floue**

Fuzzy-Logiksteuerung

Fuzzy logic controller

(84) Etats contractants désignés:
**AT BE CH DE DK ES FR GB GR IE IT LI LU MC NL PT SE**

(30) Priorité: 26.03.1993 CH 92493
18.05.1993 FR 9306097
08.10.1993 CH 304193

(43) Date de publication de la demande:
**28.09.1994 Bulletin 1994/39**

(73) Titulaire: **CSEM
Centre Suisse d'Electronique et de
Microtechnique S.A.
2007 Neuchâtel (CH)**

(72) Inventeur: **Landolt, Olivier
CH-2000 Neuchâtel (CH)**

(74) Mandataire: **de Montmollin, Henri et al
ICB
Ingénieurs Conseils en Brevets SA
Rue des Sors 7
2074 Marin (CH)**

(56) Documents cités:
- **IEICE TRANSACTIONS ON FUNDAMENTALS OF ELECTRONICS, COMMUNICATIONS AND COMPUTER SCIENCES vol. E75-A, no. 6 , Juin 1992 , TOKYO JP pages 650 - 654 XP000310882 M. SASAKI ET AL. 'Current-Mode Analog Fuzzy Hardware with Voltage Input Interface and Normalization Locked Loop'**
- **IEEE TRANSACTIONS ON SYSTEMS, MAN AND CYBERNETICS vol. 23, no. 2 , Mars 1993 , NEW YORK US pages 467 - 477 XP000398705 R. YAGER 'Element Selection from a Fuzzy Subset Using the Fuzzy Integral'**
- **FUZZY SETS AND SYSTEMS vol. 40, no. 3 , 15 Avril 1991 , AMSTERDAM NL pages 473 - 489 XP000202697 M. GUPTA ET AL. 'Design of fuzzy logic controllers based on generalized T-operators'**
- **ELECTRONICS LETTERS. vol. 28, no. 4 , 13 Février 1992 , STEVENAGE GB pages 352 - 354 XP000292285 O. LANDOLT ET AL. 'CMOS SELFBIASED EUCLIDEAN DISTANCE COMPUTING CIRCUIT WITH HIGH DYNAMIC RANGE'**
- **PROCEEDINGS OF THE SECOND IEEE INTERNATIONAL CONFERENCE ON FUZZY SYSTEMS, 28 MARCH - 1 APRIL 1993, SAN FRANCISCO, CA., USA. vol. 1 , 1993 , IEEE, NEW YORK, USA. pages 453 - 458 XP000371460 O. LANDOLT 'Efficient analog CMOS implementation of fuzzy rules by direct synthesis of multidimensional fuzzy subspaces'**

EP 0 617 359 B1

## Description

L'invention concerne un contrôleur à logique floue permettant la mise en oeuvre d'au moins une règle de comportement, chacune desdites règles comportant au moins une condition consistant en une relation d'ordre entre une variable d'entrée et une valeur de référence, ledit contrôleur fonctionnant en attribuant à un ensemble de variables de sortie des grandeurs qui sont déterminées à partir des valeurs prédéterminées en les pondérant chacune par un degré de vérité global d'une règle.

L'invention concerne plus particulièrement un contrôleur à logique floue du type décrit ci-dessus et réalisé dans la forme d'un circuit analogique intégré.

Le comportement d'un système peut, en principe, être décrit par un ensemble de "règles" ou de "fonctions", chacune de ces "règles" définissant, pour une situation donnée, le comportement du système dans un proche avenir. Le comportement d'un système dynamique sera décrit complètement si l'ensemble des "règles" dont on dispose définit son comportement futur à partir de chacune des situations données possibles.

Selon une approche classique du problème, un système est défini par une ensemble de fonctions (des fonctions de plusieurs variables généralement) et un circuit électronique, destiné à simuler ou à réaliser ce système, devra être en mesure de déterminer les valeurs prises par ces fonctions pour chaque jeu de valeurs possibles des variables d'entrée de ces fonctions. Dans le cas de systèmes particulièrement complexes, cette approche classique est pratiquement impossible à mettre en oeuvre à l'aide d'un circuit analogique et sa mise en oeuvre par des moyens numériques, nécessite une puissance de calcul énorme dès que l'on désire obtenir des résultats suffisamment précis dans un temps de réaction suffisamment court.

Pour faire face à ce problème de complexité excessive des opérations de calcul, on a développé un certain nombre d'approches alternatives du présent problème technique. Parmi celles-ci, les approches développées à partir du formalisme des ensembles flous et de la logique floue suscitent un intérêt croissant. On trouve, notamment, une introduction à la logique floue dans le mensuel "La Recherche" - D.Dubois, H.Prade, LA RECHERCHE, 1308, 22, (1991).

Bien que le mode de fonctionnement du circuit électronique selon la présente invention ne soit pas fondamentalement lié au formalisme de la logique floue et qu'il pourrait très bien être décrit sans y faire référence, nous utiliserons le vocabulaire et les concepts communément associés à ce formalisme pour décrire son fonctionnement.

Dans la logique floue, les règles de comportement d'un système sont essentiellement qualitatives, et sont exprimées généralement en langage naturel par un énoncé du type "SI condition, ALORS conclusion" ou sous forme tabulaire. L'énoncé d'une règle de comportement comprendra, le plus généralement, plusieurs conditions et pourra se présenter sous une forme du type "SI X est A et Y est B, ALORS Z est C" ou du type "SI X est A ou Y est B, ALORS Z est C" ou encore sous la forme d'une expression complexe obtenue par combinaison des deux formes ci-dessus. Les symboles A, B et C sont ici des termes linguistiques. Un des nombreux avantages de cette approche qualitative de la logique floue est qu'elle ne nécessite, pour sa mise en oeuvre, aucune opération arithmétique très complexe ou très précise.

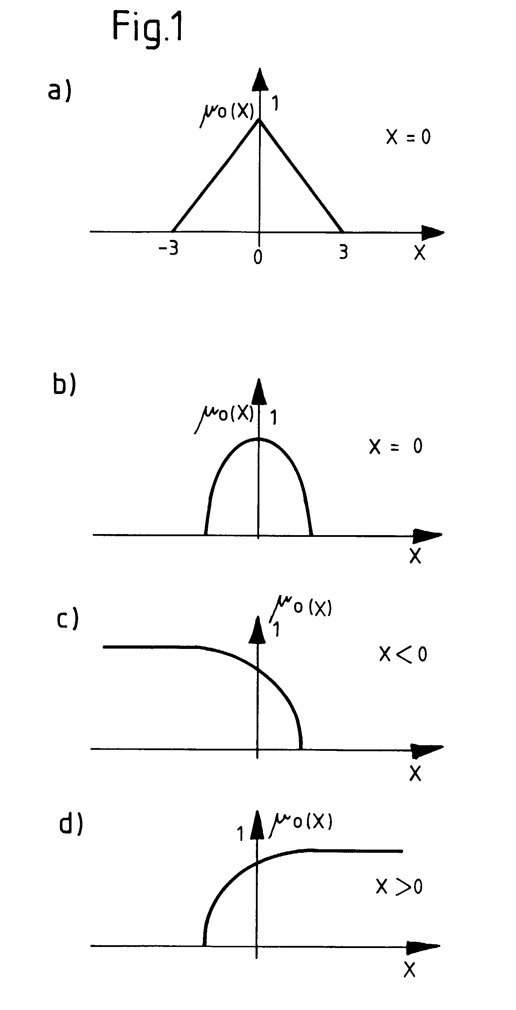

Pour simuler (cas de la modélisation) ou réaliser (cas de la spécification) un système décrit par des règles comme celles de la logique floue, il est nécessaire de transposer celles-ci en expressions mathématiques évaluables numériquement et telles que la dynamique du système, ainsi décrit, corresponde de façon satisfaisante à l'idée que peut s'en faire un être humain à partir des règles du langage usuel. Sur le plan théorique, cette transposition en termes quantitatifs peut se faire à l'aide du formalisme des ensembles flous et de la logique floue. Les termes A, B et C, figurant dans les règles ci-dessus, seront tout d'abord modélisés par des ensembles ou intervalles flous. Un ensemble flou permet la représentation commode des valeurs plus ou moins compatibles avec la description d'une situation type dans laquelle le système que l'on cherche à simuler ou à réaliser peut se trouver. Un ensemble flou A se caractérise par une fonction d'appartenance notée $\mu A\,(x)$ et pouvant prendre des valeurs comprises entre 0 et 1; la fonction d'appartenance $\mu A\,(x)$ est le degré de compatibilité de la valeur prise par la variable d'entrée X avec la condition "X est A" ou, en d'autres termes, $\mu A\,(x)$ est le degré de vérité de l'affirmation "X est A". Les figures 1a, 1b, 1c et 1d représentent des exemples de graphes de fonctions d'appartenance à des intervalles flous.

Dans le cas où les prémisses d'une règle ne comprennent qu'une seule condition, la connaissance de la valeur prise par la fonction d'appartenance, correspondant à cette condition détermine immédiatement le degré de pertinence ou degré de vérité global de cette règle. Dans le cas où les prémisses d'une règle comprennent plusieurs conditions, on détermine le degré de vérité global de cette règle en combinant entre eux les degrés de vérité de chacune des conditions. Cette opération de combinaison des degrés de vérité, c'est-à-dire des fonctions d'appartenance, peut être réalisée à l'aide d'opérateurs de la logique floue, comme l'opérateur MIN et l'opérateur MAX, qui correspondent respectivement au termes du langage naturel "ou" et "et".

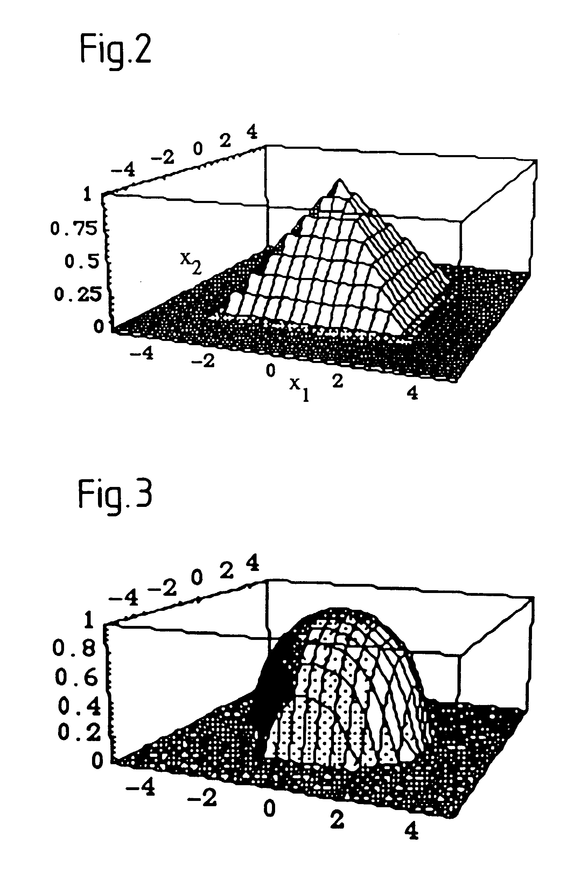

Dans les dispositifs connus, qu'ils soient construits autour d'un micro-processeur numérique ou d'un circuit intégré analogique, on évalue le degré de pertinence d'une règle en reproduisant fidèlement la méthode fournie par le formalisme de la logique floue. Le circuit intégré évalue donc tout d'abord les fonctions d'appartenance, en fonction des valeurs particulières prises par les variables d'entrée Xi, qui correspondent aux différentes conditions constituant les prémisses de la règle. Puis, le dispositif utilise des portes logiques floues, par exemple des portes "MIN" et "MAX" correspondant aux deux opérateurs mentionnés plus haut, pour évaluer, à partir desdites valeurs des fonctions d'appartenance, le degré de vérité global de l'ensemble des conditions constituant les prémisses de la règle. On voit, sur la figure 2, un graphe correspondant au degré de vérité global d'une règle à deux conditions.

A chaque règle est associé un ensemble de valeurs de sortie qui peuvent être représentées soit par des intervalles flous soit par des nombres réels. Lesdites valeurs fournies comme conclusion de la règle correspondent à des valeurs prédéterminées programmées d'une façon ou d'une autre dans le dispositif, et qui sont pondérées en fonction du degré de vérité global des prémisses de la règle.

Le comportement d'un système est, le plus souvent, déterminé par tout un ensemble de règles dont les degrés de pertinence respectifs doivent être évalués simultanément. Dans le cas le plus simple, les valeurs d'entrée du système sont telles qu'il n'y a qu'une seule règle dont les prémisses s'avèrent avoir un degré de vérité différent de zéro, et le degré de vérité des autres règles est nul. Dans une telle situation, on dit qu'une seule règle est active et les valeurs des variables de sortie seront égales auxdites valeurs prédéterminées correspondant à la conclusion de la règle active quel que soit le degré de vérité des prémisses de celle-ci. En revanche, il se peut aussi que le système se trouve dans un état intermédiaire, c'est-à-dire que ses variables d'entrée prennent des valeurs telles que les conditions constituant les prémisses de plusieurs règles voisines ont chacune un degré de vérité non nul. Dans ce cas on dit que plusieurs règles sont actives et le dispositif détermine la valeur des variables de sortie en pondérant les valeurs prédéterminées associées aux sorties des différentes règles actives. Un procédé de détermination d'un centre de gravité est souvent utilisé pour effectuer cette pondération.

La méthode qui vient d'être décrite pour la mise en oeuvre de règles de comportement présente certains défauts. En particulier, l'évaluation du degré de vérité global des prémisses d'une règle à l'aide de porte "Min" et "Max", par exemple, se prête mal à une implémentation sous forme d'un circuit analogique compact.

Un but de la présente invention est donc de remédier à cet inconvénient de l'art antérieur.

Ainsi, la présente invention a pour objet un contrôleur à logique floue permettant la mise en oeuvre d'au moins une règle de comportement, chacune desdites règles comportant au moins une condition consistant en une relation d'ordre entre une variable d'entrée et une valeur de référence, ledit contrôleur fonctionnant en attribuant à un ensemble de variables de sortie des grandeurs qui sont déterminées à partir de valeurs prédéterminées en les pondérant chacune par un degré de vérité global d'une règle, ledit degré de vérité global étant déterminé par combinaison des degrés de vérité respectifs des conditions de ladite règle, ledit degré de vérité d'une condition étant égal à 1 lorsque la condition est vérifiée strictement et égal à 0 lorsque la condition est considérée comme non vérifiée, ledit contrôleur comportant au moins un circuit de détermination dudit degré de vérité global et un circuit de détermination desdites grandeurs des variables de sortie et étant caractérisé en ce que lesdits circuits de détermination du degré de vérité global comprennent :

- une pluralité de circuits de détermination de distance qui fournissent en sortie, chacun, un signal de distance dont l'amplitude est, d'une part, nulle lorsque ladite relation d'ordre de la condition est strictement vérifiée entre ladite variable d'entrée et ladite valeur de référence, et dont l'amplitude est, d'autre part, une fonction croissante de la valeur absolue de la différence entre ladite variable d'entrée et ladite valeur de référence lorsque la relation d'ordre entre ces deux grandeurs n'est pas strictement vérifiée;
- un circuit de sommation par règle, réalisant la somme des amplitudes desdits signaux de distance obtenus pour ladite règle; et
- au moins un circuit de transformation recevant ladite somme fournie par ledit circuit de sommation et délivrant un signal qui est égal à 0 lorsque ladite somme est supérieure à une valeur de seuil donnée, est égal à 1 lorsque ladite somme est au minimum et prend des valeurs continuement croissantes entre 0 et 1 lorsque ladite somme varie entre, respectivement, ladite valeur de seuil donnée et ladite valeur minimum.

D'autres modes de réalisation sont spécifiés dans les revendications dépendantes.

Afin de faciliter la compréhension de l'objet de la présente invention, nous allons nous intéresser tout d'abord à un exemple de règle floue pouvant s'énoncer de la façon suivante :

$$\underline{Si} \ X1 \cong A1 \ et \ X2 \cong A2 \ \underline{alors} \ Y = B$$

La règle floue ci-dessus, comporte deux conditions, le terme X1 étant la variable d'entrée de la première condition et le terme X2 étant la variable d'entrée de la seconde condition, alors que les termes A1 et A2 sont les valeurs de référence de la première et de la deuxième condition respectivement.

La présente invention ne se limite pas à des règles ayant la forme qui vient d'être décrite. Toutefois, l'examen de cet exemple particulier devrait faciliter la compréhension de l'invention.

Pour évaluer le degré de pertinence de la règle à deux conditions ci-dessus, un contrôleur selon l'invention comprendra deux circuits de détermination de distance fournissant chacun un signal de distance dont l'amplitude est une fonction croissante de la valeur absolue de la différence entre la variable d'entrée X et la valeur de référence A d'une des deux conditions. Chacune de ces fonctions croissantes étant, de plus, caractérisée par le fait que sa valeur est sensiblement nulle lorsque la différence entre la valeur d'entrée X et la valeur de référence A est sensiblement nulle.

Ce comportement en fonction de la différence entre le signal d'entrée et le signal de référence est, comme on peut s'en rendre compte, pratiquement inverse de celui d'une fonction d'appartenance classique dont la valeur s'approche, par définition, de zéro à mesure qu'augmente la différence entre la valeur d'entrée et la valeur de référence de la condition.

Le circuit de sommation par règle du contrôleur selon l'invention produit un signal égal à la somme des amplitudes des signaux de distance. Ce signal de somme sera donc fonction de l'ensemble des variables d'entrée de toutes les conditions. Dans un tel cas, il est commode de se représenter l'ensemble des variables d'entrée {X1, X2,.., Xn} pour les différentes conditions comme les différentes composantes d'un vecteur indiquant la position d'un point $\vec{X}$ dans un espace de dimensions multiples et de se représenter de même l'ensemble des valeurs de référence {A1, A2,.., An} pour les différentes conditions, comme les différentes composantes d'un vecteur indiquant la position d'un deuxième point $\vec{A}$ dans le même espace à dimensions multiples.

On peut se convaincre facilement que le signal produit par le circuit de sommation par règle sera égal à zéro lorsque la position du point $\vec{X}$, défini ci-dessus, sera confondue avec la position du point $\vec{A}$ également défini ci-dessus. De plus, la valeur de la somme sera une fonction croissante de l'amplitude de chacun des signaux de distance que le circuit de sommation reçoit en entrée. On peut donc dire que l'amplitude du signal produit par le circuit de sommation est représentative de la distance entre les points $\vec{X}$ et $\vec{A}$. Précisons que le mot distance, ici, n'est pas limité à la distance enclidienne, mais qu'il doit au contraire être compris dans sens le plus général compatible avec la revendication 1.

Un contrôleur selon la présente invention comprend en outre un circuit de transformation qui permet d'obtenir, à partir du signal produit par le circuit de sommation, le degré de vérité global de la règle.

D'autres caractéristiques de l'invention apparaîtront au cours de la description qui va suivre, donnée uniquement à titre d'exemple et faite en se référant aux dessins annexés sur lesquels :

- les figures 1a et 1b sont les graphes de deux exemples de fonctions d'appartenance correspondant à l'affirmation floue "X ≅ 0";
- les figures 1c et 1d sont les graphes de deux exemples de fonctions d'appartenance correspondant respectivement aux affirmations floues "X < 0" et "X > 0";
- la figure 2 est le graphe du degré de vérité global des prémisses d'une règle à deux variables d'entrée, obtenue de façon classique par combinaison de deux fonctions d'appartenance correspondant respectivement aux affirmations "X1 ≅ 0" et "X2 ≅ 0";
- la figure 3 est le graphe du degré de vérité global des prémisses de la règle de la figure 2, évaluée conformément à un mode particulier de mise en oeuvre de l'invention, à l'aide du calcul de la distance euclidienne au carré;
- la figure 4 est le schéma d'un exemple de circuit de détermination du degré de vérité d'une règle ne comprenant qu'une seule condition conforme à la présente invention;
- la figure 5 est le graphe du comportement du courant électrique traversant une paire de transistors MOS connectés comme les transistors 26 et 28 de la figure 4;
- les figures 6a et 6b sont les schémas de deux éléments de circuit destinés à remplacer la portion de circuit référencée 5 sur la figure 4, pour mettre en oeuvre des règles dont les conditions ont respectivement des formes du type "X < A" et "X > A";
- la figure 7 est le schéma d'un exemple de circuit de détermination du degré de vérité global d'une règle à deux conditions;
- la figure 8 est le schéma d'une partie d'un exemple de circuit de détermination des grandeurs des variables de sortie d'un contrôleur permettant la mise en oeuvre de plusieurs règles;
- la figure 9 est le schéma des connexions à réaliser entre différentes parties de circuits comme celle de la figure 8 pour réaliser une somme pondérée des conclusions d'un ensemble de règles;
- la figure 10 est le schéma d'un circuit de détermination de distance qui, selon un autre mode de réalisation de l'invention, est destiné à remplacer la portion de circuit référencée 5 sur la figure 4 et les portions de circuit 105a et 105b de la figure 7;
- la figure 11 est une variante du circuit de détermination de distance de la figure 10.
- la figure 12 est le schéma d'un élément destiné à être utilisé à la place de la portion de circuit référencée 3 sur la figure 4 dans les modes de réalisation qui utilise le circuit de détermination de distance de la figure 11.

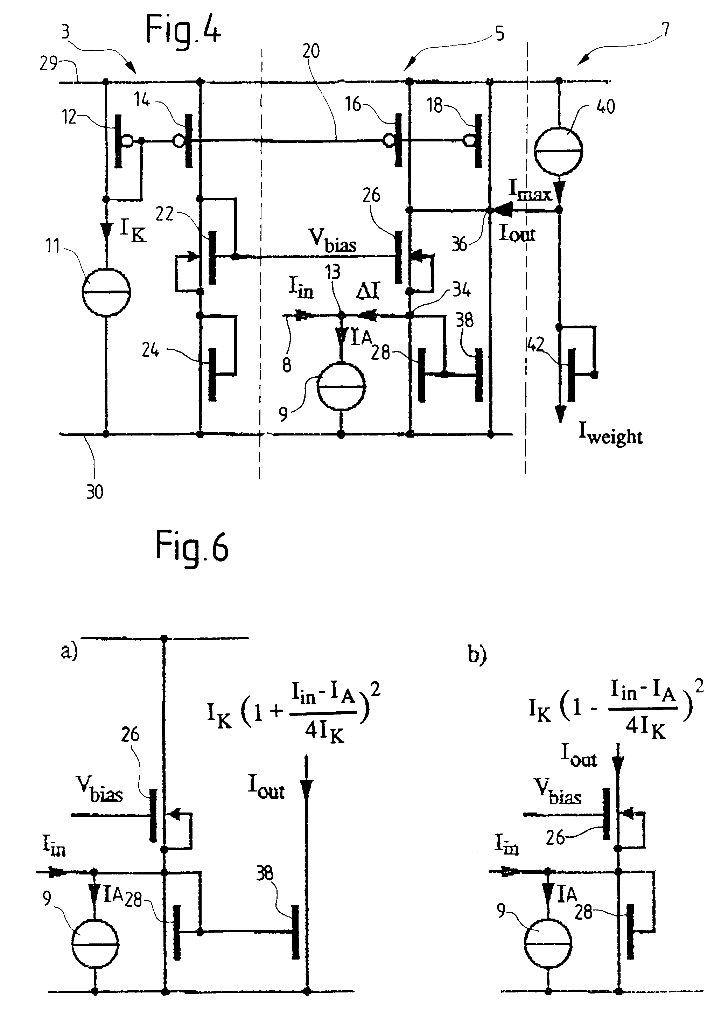

La figure 4 représente de façon schématique un exemple de circuit analogique, conforme à la présente invention, destiné à déterminer le degré de vérité d'une règle de commande à une seule condition. La règle mise en oeuvre par le circuit de la figure 4 ne comportant qu'une seule condition, ce circuit est particulièrement simple et permet de comprendre facilement le fonctionnement de certains éléments de la présente invention.

Le circuit schématisé sur la figure 4 sert à l'évaluation du degré de vérité d'une règle dont la condition peut s'exprimer sous la forme Si X = A". Ce circuit peut être réalisé, par exemple, en technologie CMOS. Notons que dans le mode de réalisation particulier représenté ici, les valeurs à traiter sont des intensités de courant électrique. Selon le circuit de la figure 4, l'intensité du courant en entrée (Iin) correspond à la valeur de la variable d'entrée, et l'intensité du courant de référence (IA) correspond à la valeur de référence.

Le schéma électronique de la figure 4 peut être subdivisé en trois parties. Une première partie de circuit référencée 3 est destinée à fixer une tension de polarisation (Vbias). Cette partie 3 est constituée par un générateur de courant 11 produisant un courant de polarisation (IK), deux transistors de type P (référencés respectivement 12 et 14) et deux transistors de type N (référencés 22 et 24). La fonction de cette partie 3 est de fixer la tension (Vbias) sur la grille du transistor 22.

Une deuxième partie du schéma électronique est constituée par un circuit de détermination de distance 5 qui est destiné à produire un signal de distance en fonction de la valeur absolue de la différence entre la valeur d'entrée de la règle (Iin) et la valeur de référence (IA). L'élément de circuit 5 est destiné à produire un courant proportionnel au carré de la différence entre les intensités Iin et IA fournies en entrée. Un tel circuit est connu en soi, et est décrit par exemple dans un article de K. Bult et H. Wallinga paru dans IEEE Journal of solid-state Circuits, 357, _22_ (1987).

Le circuit 5 comprend un générateur de courant 9 une première branche qui, avec les transistors 16,26 et 28 est identique à celle formée par les transistors 14,22 et 24, de la partie de circuit 3, et une deuxième branche comprenant les transistors P 18 et N 38 connectés en série. Les grilles des transistors 18 et 38 sont reliées aux grilles des transistors 16 et 28 respectivement, et les drains des transistors 16 et 18 sont reliés entre eux, de sorte que ces deux transistors en parallèle sont équivalents à un transistor dont la surface de canal serait double.

Une troisième partie du schéma électronique référencée 7 est constituée par un circuit de transformation selon l'invention. Le circuit 7 comprend un générateur de courant 40 destiné à fournir un courant maximum Imax et un transistor de type N 42 faisant office de diode pour que le courant de sortie ne soit jamais négatif.

Si on examine maintenant en détail le fonctionnement de la partie 3 du circuit de la figure 4, qui est destiné à produire la tension de polarisation (Vbias), on constate que le générateur de courant 11 a son entrée reliée au drain du transistor de type P 12, et que ces deux éléments sont connectés en série entre la ligne d'alimentation positive 29 et la masse 30. Ainsi l'intensité du courant traversant le transistor 12 est égale à l'intensité produite par le générateur 11, c'est-à-dire au courant de polarisation IK. Le transistor 12 et le transistor 14 sont en outre connectés de manière à former un miroir de courant de rapport 1. Dans cette disposition, le courant traversant le transistor 14 est également d'intensité IK. On voit également sur la figure que les deux transistors 22 et 24 sont reliés en série entre le drain du transistor 14 et la masse; ils sont donc également traversés par un courant d'intensité IK. Les grilles des transistors 22 et 24 sont également reliées à leurs drains respectifs, et la tension de polarisation (Vbias) présente entre la grille du transistor 22 et la masse, est donc commandée directement par l'intensité du courant IK produit par le générateur 11. La tension (Vbias) est destinée à être fournie à la deuxième partie 5 du circuit pour servir de tension de polarisation.

Le circuit de détermination de distance 5 reçoit un courant d'intensité (Iin) fourni à travers une entrée référencée 8. Ce courant est représentatif de la valeur de la variable d'entrée X pour la condition de la règle. Le générateur de courant 9 produit de son côté un courant dont l'intensité IA est représentative de la valeur de référence A de la condition. Lorsque l'intensité Iin est telle qu'elle équilibre exactement l'intensité IA (X = A), tout courant I1 qui traverse le transistor 26 doit également traverser le transistor 28 puisque ces deux éléments sont montés en série. Dans ces conditions, par symétrie, le courant dans les transistors 26 et 28 est encore égal au courant IK traversant les transistors 22 et 24. Le courant I1 traversant le transistor 26 étant de même intensité que le courant I2 traversant le transistor 28 et ces deux transistors étant de plus de constructions semblables, les tensions V1 et V2 représentant respectivement la tension grille-source des transistors 26 et 28, seront les mêmes. De plus, la grille du transistor 26 étant maintenue à la tension de polarisation (Vbias), on a forcément toujours :

$$V1 + V2 = Vbias$$

La relation ci-dessus reste vraie dans le cas général où le courant Iin ne compense pas nécessairement le courant IA (X # A). Notons encore que dans ce cas, le courant I2 qui traverse le transistor 28 n'est plus égal au courant I1 qui traverse le transistor 26. La relation générale entre les courants s'écrit à ce moment là :

$$Iin - IA + I1 - I2 = 0$$

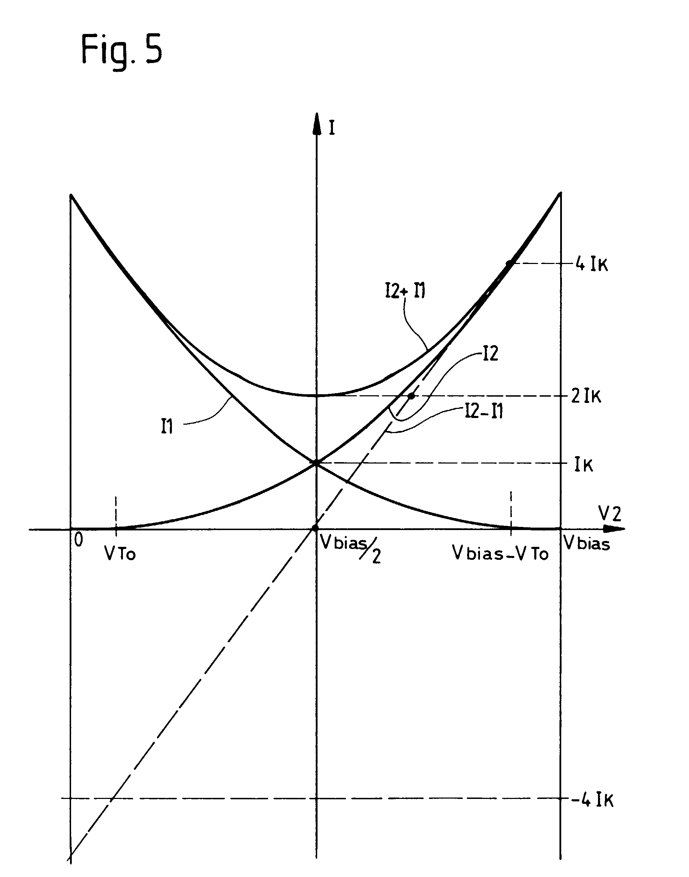

La figure 5 est un schéma du comportement général des courants I1 et I2 de la figure 4, en fonction de la tension V2. Il découle de la forme parabolique des courbes des courants I1 et I2 sur le schéma, que la différence entre les intensités de ces deux courants (I1 - I2) est proportionnelle à la différence entre les tensions V1 et V2. De plus il découle également de la forme parabolique des courbes I1 et I2 que la somme des intensités de ces courants se décompose en un premier terme constant égal à deux fois Ik et un deuxième terme proportionnelle au carré de la différence entre les tensions V1 et V2. Ces observations nous permettent de conclure que :

I1+I2 est égal à 2Ik + un terme proportionnel au carré de I1-I2.

Notons encore que l'intensité du courant traversant le transistor 38 est égal à I2 puisque les transistor 28 et 38 sont dans une configuration de miroir de courant.

On peut conclure de considération ci-dessus que l'intensité du courant Iout circulant entre l'élément de circuit 5 et l'élément de circuit 7 est donné par la relation suivante :

$$0 = 2Ik + Iout - I1 - I2$$

On peut établir que le courant Iout est tel que :

$$Iout = 1/8Ik * (Iin - IA)^2$$

Le signal de sortie fourni par un circuit intégré comme celui qui vient d'être décrit ne se comportera selon la relation ci-dessus qu'avec une précision limitée. toutefois, dans la présente application, c'est le comportement qualitatif du signal qui est déterminant.

La troisième partie 7 du circuit de la figure 4, constituée par le circuit de transformation, soustrait l'intensité Iout fournie par la partie 5 du circuit à un courant d'intensité Imax produit par le générateur de courant 40. Le courant d'intensité Iweight résultant de cette opération est donc le complémentaire du signal Iout fourni par le circuit de détermination de distance. Le signal Iweight traverse ensuite le transistor 42 qui fonctionne comme une diode ne laissant passer le courant que si son intensité est positive. Le graphe de l'intensité du courant Iweight en fonction de l'intensité Iin aura l'allure générale de la courbe de la figure 1b.

L'intensité du courant Iout fourni par le circuit 5 du présent exemple est, conformément à ce qui vient d'être dit, égal au carré de la différence ou plus généralement au carré de la distance euclidienne entre les deux points X et A, divisé par 8 Ik. Le courant de polarisation Ik joue donc le rôle de paramètre de normalisation de la distance.

Comme nous l'avons déjà dit, le circuit électronique qui vient d'être décrit fourni donc un courant dont l'intensité est fonction du degré de vérité global d'une règle à une seule valeur d'entrée du type :

SI X = A ALORS Y = B

Les figures 1c et 1d donne l'allure d'un signal Iweight produit par deux variantes du circuit de la figure 4 destinées respectivement à mettre en oeuvre des règles du type :

SI X < A ALORS Y = B,

et

SI X > A ALORS Y = B

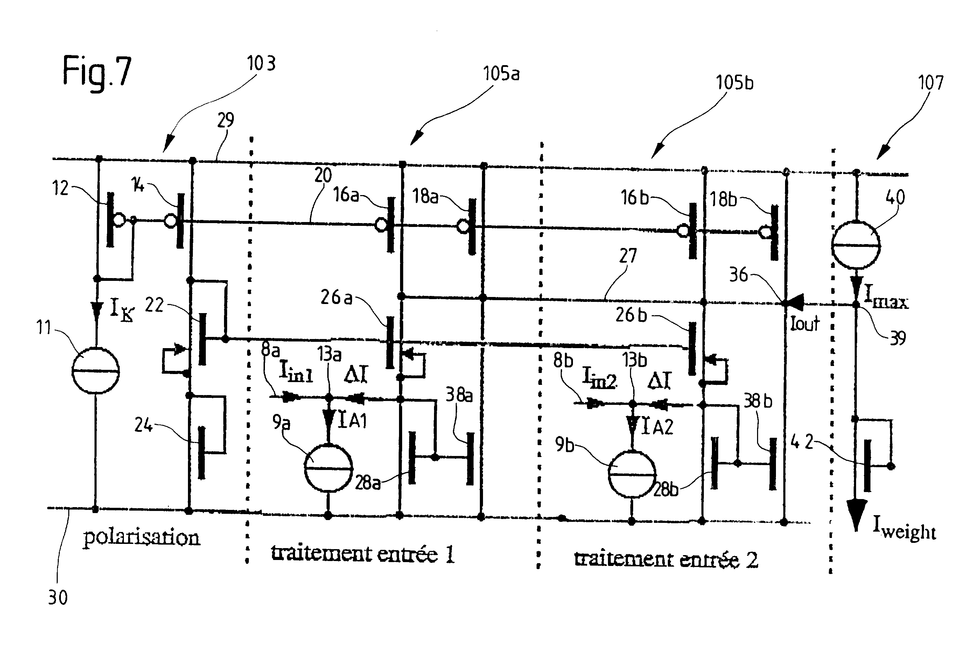

Les circuits pour la mise en oeuvre des deux règles ci-dessus sont les mêmes que celui décrit dans la figure 4 mise à part la partie 5 du circuit qui est remplacée dans les deux cas par les circuits représentés par les schémas des figures 6a et 6b respectivement.

Les composants compris dans les deux éléments de circuit des figures 6a et 6b et qui se retrouvent sur la figure 4 y sont repérés par les mêmes références. Des raisonnements semblable à ceux utilisés plus haut permettent de déterminer que l'intensité du courant Iout constituant la valeur de distance produite par chacun de ces circuits dépend de la valeur d'entrée Iin selon la relation suivante :

$$Iout = Ik (1 + (Iin-IA) / 4Ik)^2 \text{ pour la figure 6a}$$

et

$$Iout = Ik (1 - (Iin-IA) / 4Ik)^2 \text{ pour la figure 6b}$$

Les figures 1c et 1d donnent les allures respectives des signaux Iweight générés à partir des signaux Iout produit dans ces deux variantes de la partie 5 du circuit.

La figure 7 est le schéma d'un circuit analogique conforme à l'invention et destiné à l'évaluation du degré de vérité global d'une règle de comportement à deux conditions. Ce circuit fonctionne selon le même principe que celui de la figure 4 qui à été décrit plus haut.

Le schéma électrique du circuit de la figure 7 se subdivise en quatre parties référencées respectivement 103, 105a, 105b et 107. La première partie 103 est un circuit destiné à fixé une tension de polarisation. Ce circuit est identique au circuit 3 du schéma de la figure 4 et ses différents composants sont repérés par les mêmes références sur la figure 7 que sur la figure 4. Le lecteur pourra se référer à la figure 4 pour une explication du fonctionnement de ce circuit.

La deuxième et la troisième partie du circuit référencées respectivement 105a et 105b, sont formée chacune par un circuit identique au circuit 5 du schéma de la figure 4. Chacun de ces circuits reçoit un signal d'entrée (référencés respectivement Iin1 et Iin2) par une entrée (8a et 8b respectivement), et les sorties de ces deux circuits sont toutes deux reliées au même noeud 36 du circuit de la figure 7. Ce noeud 36 est également connecté à la quatrième partie du circuit 107. Les liaisons des sorties des parties 105a et 105b avec le noeud 36 du circuit constituent le circuit de sommation par règle selon l'invention. Conformément à l'invention, les parties 105a et 105b pourraient naturellement être remplacées par exemple par les circuits des figures 6a ou 6b.

La quatrième partie du circuit référencée 107 est identique à la partie 7 du circuit de la figure 4.

Nous avons jusqu'ici décrit quelques variantes d'un mode de réalisation de la présente invention dans lequel l'amplitude du signal de distance fourni par chacun des circuits de détermination de distance (référencés 5 sur la figure 4 et 105a et 105b sur la figure 7) est une fonction quadratique de la différence entre l'intensité Iin et l'intensité IA. Nous allons maintenant nous intéresser à un mode de réalisation dans lequel l'amplitude du signal de distance est proportionnelle à la valeur absolue de la différence entre le signal Iin et le signal IA.

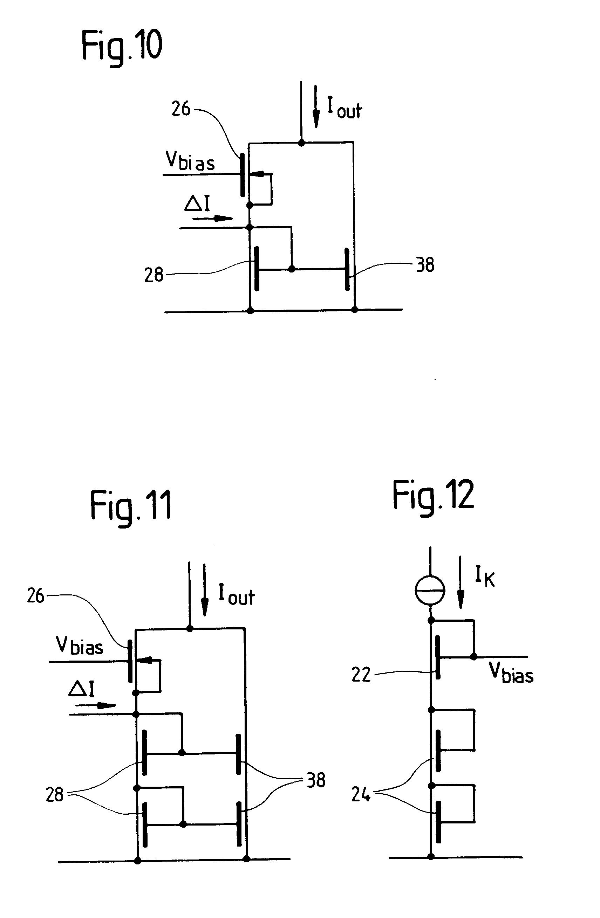

La figure 10 est le schéma du quadrateur de courant déjà décrit en relation avec la figure 4, représenté ici dans sa variante la plus simple. Les numéros de référence sur la figure 10 sont les mêmes que ceux des éléments équivalents sur la figure 4. De plus, les tensions grille-source des transistors 26 et 28 sont, comme précédemment, désignées respectivement par V1 et V2 et, de façon semblable, les courants traversant les transistors 26 et 28 sont respectivement désignés par I1 et I2.

Lors de la description de la figure 4, on ne s'est intéressé qu'au cas où la différence entre le courant d'entrée Iin et le courant de référence IA était inférieure à 4 * IK. En choisissant IK très petit par rapport aux intensités maximales de Iin et de IA, il est naturellement possible de se mettre dans une situation où la différence entre Iin et IA est pratiquement toujours supérieure à 4 * Ik ou, plus précisément, dans une situation où la différence entre Iin et IA est supérieure à 4 * IK sauf lorsque la condition de la règle (Iin=IA) est pratiquement vérifiée.

En se référant maintenant simultanément à la figure 5 et à la figure 10, on peut voir que, dans la situation qui vient d'être évoquée, l'intensité d'un des courants I1 ou I2 sera presque toujours sensiblement nulle, alors que l'intensité de l'autre courant sera égale à la différence entre Iin et IA (notée ΔI sur la figure 10). On comprendra finalement que dans le circuit de la figure 10, le courant Iout sera égal soit à I1 soit à I2, c'est à dire, quoi qu'il en soit, à la valeur absolue de ΔI, dès que la condition de la règle n'est pas vérifiée.

Le circuit de la figure 10 forme donc un circuit de détermination de distance conforme à l'invention, qui peut remplacer, par exemple, la partie 5 du circuit de la figure 4, pour faire de ce circuit, un circuit de détermination du degré de vérité d'une règle, dans lequel l'intensité du signal de distance est une fonction linéaire de la valeur absolue de ΔI.

La figure 11 est le schéma d'une variante du circuit de la figure 10, dans laquelle les transistors 28 et 38 sont remplacés par des arrangements de type "cascode". Cette variante présente l'avantage de saturer moins vite lorsque I1 devient très grand.

La figure 12 est le schéma d'un circuit prévu pour remplacer la partie 3 du circuit de la figure 4 lorsqu'on utilise la variante de la figure 11 à la place de la partie 5 du circuit de la figure 4.

Nous avons jusqu'ici décrit quelques modes de réalisation d'un circuit de détermination du degré de vérité global conforme à l'invention destiné à déterminer le degré de vérité d'une règle. Nous allons maintenant décrire un mode de réalisation d'un circuit de détermination des grandeurs des variables de sortie conforme à l'invention qui est donc destiné à fournir la conclusion de ladite règle. Dans le présent mode de réalisation les variables de sortie ont la forme de tensions. Plus précisément, dans le mode de réalisation particulier qui nous intéresse, Les interfaces d'entrée et de sortie du circuit sont telles que celui-ci traite en fait une règle floue qui a une forme du type :

"Si l'intensité du courant en entrée (Iin) est égale à l'intensité du courant de référence (IA), alors la tension en sortie est égale à une valeur prédéterminée (Vi)".

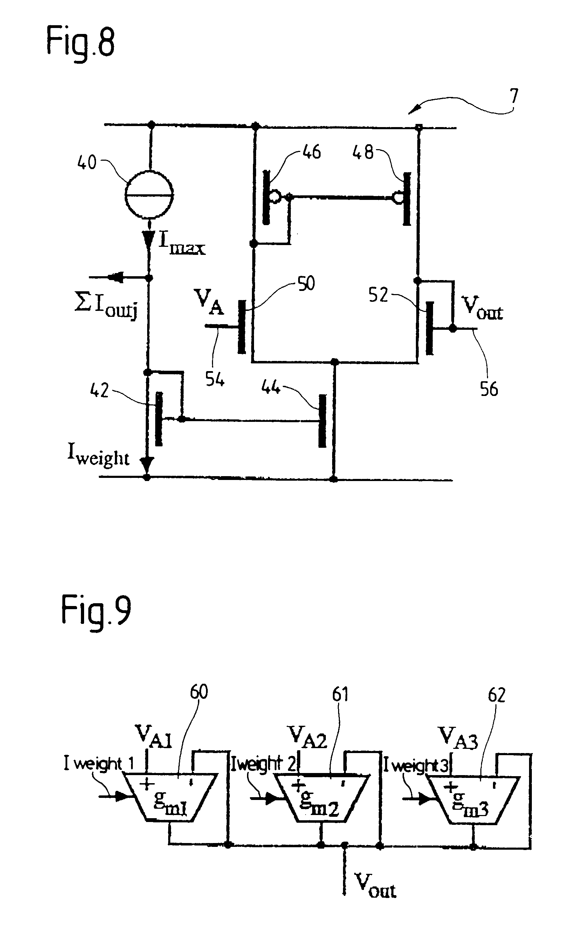

La figure 8 est un schéma d'un circuit électronique destiné à fournir la valeur d'une variable de sortie d'une règle à partir d'une valeur prédéterminée et du degré de vérité global de ladite règle, ce degré de vérité ayant préalablement été déterminé par un autre circuit qui peut être un de ceux qui ont été décrit plus haut. Le schéma du circuit de la figure 8 comprend d'abord une partie identique à la partie 7 du circuit de la figure 4 et donc également identique au circuit 107 de la figure 7. Cette partie 7 est reprise des figures précédentes pour faciliter la compréhension, mais il est bien claire que si par exemple le circuit de la figure 8 est connecté en aval du circuit de la figure 4, la partie 7 ne figurera dans le montage qu'a un seul exemplaire. Le circuit comprend de plus une partie destinée à fournir en sortie une tension qui, dans un premier cas, où il n'y a qu'une seule règle active, est égale à la tension prédéterminée VA correspondant à la valeur prédéterminée de la règle, et dans un deuxième cas où plusieurs règles sont actives, est égale à la somme des tensions prédéterminées correspondant au différentes conclusions de ces règles, cette somme étant pondérée en fonction des degrés de vérité respectifs des règles.

Conformément à ce qui vient d'être dit, on retrouve sur la figure 8 quelques composants qui figuraient déjà sur les figures 4 et 7. Ce sont le générateur de courant 40 et le transistor de type N 42. On voit sur la figure 8 que le transistor 42 et associé avec un deuxième transistor 44 dans une configuration de miroir de courant. Le courant traversant le transistor 44 est donc également d'intensité Iweight. Ce courant sert de courant de polarisation pour un amplificateur à transconductance OTA utilisé comme suiveur de tension. On voit sur la figure 6 que c'est OTA comprend deux transistors de type P 46 et 48 qui sont également dans une configuration de miroir de courant, un premier transistor de type N 50 dont le drain est connecté au transistor 46 et dont la grille est maintenue à une tension prédéterminée Vi correspondant à la valeur prédéterminée de la règle, et un deuxième transistor de type N 52 dont le drain est relié au transistor 48 et dont la tension de grille fournit la grandeur de la variable de sortie.

En raison de la configuration en miroir de courant, les intensités des courants traversant les transistors 46 et 48 sont les mêmes. De plus, ces transistors étant montés en parallèles, la somme des intensités les traversant est égale à Iweight (pour autant qu'aucun courant ne soit absorber par la sortie (Vout) 56. Dans ces conditions l'intensité des courants traversant les transistors 50 et 52 sont les mêmes et en conséquence la tension de la grille du transistor 52, c'est-à-dire la tension Vout fournie en sortie, va être égale à la tension Vi appliquée sur la grille du transistor 50, c'est à dire à la tension prédéterminée correspondant à la valeur prédéterminée formant la conclusion de la règle. Les circuits décrits jusqu'ici ne mettant en jeu qu'une seule règle, il est normal que conformément à ce que nous venons de voir, la tension fournie en sortie soit égale à la tension prédéterminée Vi correspondant à la conclusion de la règle, et ceci quel que soit le degré de vérité global de cette règle, pour autant que celui-ci ne soit pas nul.

Il est possible de mettre en oeuvre simultanément plusieurs règles, en ayant recours à plusieurs circuits identiques à celui qui vient d'être décrit. Pour ce faire il suffit de relier entre elles les sorties 56 (figure 8) des circuits fournissant respectivement les grandeurs des variables de sortie pour les conclusions des différentes règles. Les connexions entre les sorties des circuits correspondant à trois règles différentes sont représentées schématiquement sur la figure 9 où chacun des OTA de transconductance gm correspond à un exemplaire du circuit de la figure 8. Lorsque les sorties Vout de plusieurs règles sont connectées, la tension Vout résultante est égale à la somme des tensions Vi de chaque règle pondérée en fonction des degrés de pertinence respectifs.

$$V_{out} = \frac{\Sigma \, g_{mi} \, V_{Ai}}{\Sigma \, g_{mi}}$$

où gm; est la transconductance du $i^{ème}$ OTA.

**Revendications**

1. Contrôleur à logique floue permettant la mise en oeuvre d'au moins une règle de comportement, chacune desdites règles comportant au moins une condition consistant en une relation d'ordre entre une variable d'entrée (X) et une valeur de référence (A), ledit contrôleur fonctionnant en attribuant à un ensemble de variables de sortie (Y) des grandeurs (Vout) qui sont déterminées à partir de valeurs prédéterminées (VA) en les pondérant chacune par un degré de vérité global d'une règle, ledit degré de vérité global étant déterminé par combinaison des degrés de vérité respectifs des conditions de ladite règle, ledit degré de vérité d'une condition étant égal à 1 lorsque la condition est vérifiée strictement et égal à 0 lorsque la condition est considérée comme non vérifiée, ledit contrôleur comportant au moins un circuit de détermination dudit degré de vérité global (figure 4) et un circuit de détermination desdites grandeurs des variables de sortie (figures 8 et 9) et étant caractérisé en ce que lesdits circuits de détermination du degré de vérité global comprennent :

- une pluralité de circuits de détermination de distance (5; 105a, 105b) qui fournissent en sortie, chacun, un signal de distance dont l'amplitude est, d'une part, nulle lorsque ladite relation d'ordre de la condition est vérifiée entre ladite variable d'entrée (Iin) et ladite valeur de référence (IA), et dont l'amplitude est, d'autre part, une fonction croissante de la valeur absolue de la différence (ΔI) entre ladite variable d'entrée et ladite valeur de référence lorsque la relation d'ordre entre ces deux grandeurs (Iin,IA) n'est pas vérifiée;
- un circuit de sommation par règle (27, 36), réalisant la somme (Iout) des amplitudes desdits signaux de distance obtenus pour ladite règle; et
- au moins un circuit de transformation (7; 107) recevant ladite somme fournie par ledit circuit de sommation et délivrant un signal (Iweight) qui est égal à 0 lorsque ladite somme est supérieure à une valeur de seuil donnée, est égal à 1 lorsque ladite somme est au minimum et prend des valeurs continuement croissantes entre 0 et 1 lorsque ladite somme varie entre, respectivement, ladite valeur de seuil donnée et ladite valeur minimum.

2. Contrôleur selon la revendication 1, caractérisé en ce que l'amplitude dudit signal de distance fourni par chacun desdits circuits de détermination de distance (5;105a,105b), est une fonction sensiblement quadratique de la différence (ΔI) entre ladite variable d'entrée (Iin) et ladite valeur de référence (IA) lorsque la relation d'ordre entre ces deux grandeurs (Iin,IA) n'est pas vérifiée.

3. Contrôleur selon la revendication 1, caractérisé en ce que l'amplitude dudit signal de distance fourni par chacun desdits circuits de détermination de distance (5;105a,105b), est une fonction sensiblement linéaire de la valeur absolue de la différence ($\Delta$I) entre ladite variable d'entrée (Iin) et ladite valeur de référence (IA) lorsque la relation d'ordre entre ces deux grandeurs (Iin,IA) n'est pas vérifiée.

4. Contrôleur selon l'une des revendications précédentes, caractérisé en ce qu'il est réalisé à l'aide de circuits intégrés analogiques en technologie CMOS.

5. Contrôleur selon l'une des revendications précédentes, caractérisé en ce que lesdites relations d'ordre sont du type : "égal à", "différent de", "inférieur à" ou "supérieur à".

6. Contrôleur selon la revendication 1, caractérisé en ce que lesdits circuits de détermination de distance comprennent :

  - un circuit de polarisation (3;103) fournissant une tension de polarisation; et
  - un circuit de calcul de distance (5;105a,105b) comportant un générateur de courant (9) délivrant un courant de référence (IA) représentatif de ladite valeur de référencence, des moyens pour comparer l'intensité dudit courant de référence (IA) et l'intensité d'un courant (Iin) représentatif de ladite variable d'entrée et pour fournir à partir de cette comparaison un signal de différence ($\Delta$I), et des moyens (16, 18,.26, 28, 38) pour délivrer, en réponse audit signal de différence ($\Delta$I), un signal qui est une fonction croissante de l'amplitude dudit signal de différence.

7. Contrôleur selon la revendication 6, caractérisé en ce que ledit circuit de sommation comporte une ligne (27) reliant les sorties des différents circuits (105a,105b) de calcul de distance à la sortie (36) dudit circuit de sommation, et amenant à ladite sortie (36) du circuit de sommation, un courant (Iout) qui est égal à la somme des courants fournis par lesdits circuits de calcul de distance.

8. Contrôleur selon la revendication 7, caractérisé en ce que ledit circuit de transformation (7;107) comporte un générateur de courant (40) fournissant un courant (Imax) représentatif de la valeur 1, ledit générateur étant relié d'une part à la sortie (36) dudit circuit de sommation de la règle et d'autre part à la sortie dudit circuit de transformation par l'intermédiaire de moyens à effet de diode (42).

9. Contrôleur selon l'une des revendications précédentes, caractérisé en ce qu'il est prévu pour la mise en euvre d'au moins deux règles de comportement et en ce que lesdites grandeurs de sortie (Vout) sont déterminées par un circuit de pondération qui comporte une pluralité d'amplificateurs à transconductance(60, 61, 62), chacun desdits amplificateurs étant associé à une desdites règles de comportement, lesdits amplificateurs recevant chacun en entrée d'une part une desdites valeurs prédéterminées (VA) pour ladite règle de comportement et d'autre part un signal (Iweight) qui est représentatif de degré de vérité global de ladite règle et qui est fourni par un desdits au moins un circuit de transformation, les sorties desdits amplifiateurs étant reliées ensemble et fournissant une desdites grandeurs de sortie (Vout).

## Patentansprüche

1. Steuereinrichtung mit unscharfer Logik, die die Ausführung wenigstens einer Verhaltensregel ermöglicht, wobei jede der Regeln wenigstens einen Zustand enthält, der aus einer Ordnungsrelation zwischen einer Eingangsvariable (X) und einem Referenzwert (A) besteht, wobei die Steuereinrichtung in der Weise arbeitet, daß sie einer Gesamtheit von Ausgangsvariablen (Y) Größen (Vout) hinzufügt, die anhand vorgegebener Werte (VA) bestimmt werden, wovon jeder durch einen globalen Wahrheitsgrad einer Regel gewichtet wird, wobei der globale Wahrheitsgrad durch Kombination der jeweiligen Wahrheitsgrade der Zustände der Regel bestimmt ist, wobei der Wahrheitsgrad eines Zustandes gleich 1 ist, wenn der Zustand streng verifiziert wird, und gleich 0 ist, wenn der Zustand als nicht verifiziert angesehen wird, wobei die Steuereinrichtung wenigstens eine Schaltung zur Bestimmung des globalen Wahrheitsgrades (Fig. 4) und eine Schaltung zur Bestimmung der Größen der Ausgangsvariablen (Fig. 8 und 9) enthält und dadurch gekennzeichnet ist, daß die Schaltungen zur Bestimmung des globalen Wahrheitsgrades enthalten:

  - mehrere Abstandsbestimmungsschaltungen (5; 105a, 105b), die am Ausgang jeweils ein Abstandssignal liefern, dessen Amplitude einerseits null ist, wenn die Ordnungsrelation des Zustandes zwischen der Eingangsvariable (Iin) und dem Referenzwert (IA) verifiziert wird, und dessen Amplitude andererseits eine ansteigende Funktion des Absolutwerts der Differenz ($\Delta$I) zwischen der Eingangsvariable und dem Referenzwert ist, wenn die Ordnungsrelation zwischen diesen beiden Größen (Iin, IA) nicht verifiziert wird;
  - eine Regel-Summationsschaltung (27, 36), die die Summe (Iout) der Amplituden der Abstandssignale bildet, die für die Regel erhalten werden; und

- wenigstens eine Transformationsschaltung (7; 107), die die von der Summationsschaltung gelieferte Summe empfängt und ein Signal (Iweight) ausgibt, das gleich 0 ist, wenn die Summe größer als ein gegebener Schwellenwert ist, gleich 1 ist, wenn die Summe minimal ist, und zwischen 0 und 1 kontinuierlich ansteigende Werte annimmt, wenn sich die Summe zwischen dem gegebenen Schwellenwert und dem Minimalwert ändert.

2. Steuereinrichtung nach Anspruch 1, dadurch gekennzeichnet, daß die Amplitude des von jeder der Abstandsbestimmungsschaltungen (5; 105a, 105b) gelieferten Abstandssignals eine im wesentlichen quadratische Funktion der Differenz (ΔI) zwischen der Eingangsvariable (Iin) und dem Referenzwert (IA) ist, wenn die Ordnungsrelation zwischen diesen beiden Größen (Iin, IA) nicht verifiziert wird.

3. Steuereinrichtung nach Anspruch 1, dadurch gekennzeichnet, daß die Amplitude des von den Abstandsbestimmungsschaltungen (5; 105a, 105b) gelieferten Abstandssignals eine im wesentlichen lineare Funktion des Absolutwerts der Differenz (ΔI) zwischen der Eingangsvariable (Iin) und dem Referenzwert (IA) ist, wenn die Ordnungsrelation zwischen diesen beiden Größen (Iin, IA) nicht verifiziert wird.

4. Steuereinrichtung nach einem der vorangehenden Ansprüche, dadurch gekennzeichnet, daß sie mit Hilfe von analogen integrierten Schaltungen in CMOS-Technologie verwirklicht ist.

5. Steuereinrichtung nach einem der vorangehenden Ansprüche, dadurch gekennzeichnet, daß die Ordnungsrelationen vom folgenden Typ sind: "gleich mit", "verschieden von", "kleiner als" oder "größer als".

6. Steuereinrichtung nach Anspruch 1, dadurch gekennzeichnet, daß die Abstandsbestimmungsschaltungen enthalten:

- eine Vorspannungsschaltung (3; 103), die eine Vorspannung liefert; und
- eine Abstandsberechnungsschaltung (5; 105a, 105b), die einen Stromgenerator (9), der einen den Referenzwert darstellenden Referenzstrom (IA) liefert, Mittel zum Vergleichen der Stärke des Referenzstroms (IA) mit der Stärke eines die Eingangsvariable darstellenden Stroms (Iin), um anhand dieses Vergleichs ein Differenzsignal (ΔI) zu liefern, sowie Mittel (16, 18, 26, 28, 38), die als Antwort auf das Differenzsignal (ΔI) ein Signal liefern, das eine ansteigende Funktion der Amplitude des Differenzsignals ist, enthält.

7. Steuereinrichtung nach Anspruch 6, dadurch gekennzeichnet, daß die Summationsschaltung eine Leitung (27) enthält, die die Ausgänge der verschiedenen Abstandsberechnungsschaltungen (105a, 105b) mit dem Ausgang (36) der Summationsschaltung verbindet und dem Ausgang (36) der Summationsschaltung einen Strom (Iout) zuführt, der gleich der Summe der Ströme ist, die von den Abstandsberechnungsschaltungen geliefert werden.

8. Steuereinrichtung nach Anspruch 7, dadurch gekennzeichnet, daß die Transformationsschaltung (7; 107) einen Stromgenerator (40) enthält, der einen Strom (Imax) liefert, der den Wert 1 darstellt, wobei der Generator einerseits mit dem Ausgang (36) der Regel-Summationsschaltung und andererseits über Diodeneffekt-Mittel (42) mit dem Ausgang der Transformationsschaltung verbunden ist.

9. Steuereinrichtung nach einem der vorangehenden Ansprüche, dadurch gekennzeichnet, daß sie für die Ausführung wenigstens zweier Verhaltensregeln vorgesehen ist und daß die Ausgangsgrößen (Vout) durch eine Gewichtungsschaltung bestimmt werden, die mehrere Transkonduktanzverstärker (60, 61, 62) enthält, wovon jeder einer der Verhaltensregeln zugeordnet ist, wobei die Verstärker am Eingang jeweils einerseits vorgegebene Werte (VA) für die Verhaltensregel und andererseits ein Signal (Iweight), das den globalen Wahrheitsgrad der Regel darstellt und von wenigstens einer der Transformationsschaltungen geliefert wird, empfangen, wobei die Ausgänge der Verstärker gemeinsam verbunden sind und eine der Ausgangsgrößen (Vout) liefern.

**Claims**

1. Fuzzy logic controller permitting the implementation of at least one behaviour rule, each of said rules having at least one condition expressed by a relational operator between an input variable (X) and a reference value (A), said controller functioning by attributing to a set of output variables (Y) magnitudes (Vout) which are determined on the basis of predetermined values (VA) by weighting each of them by an overall degree of truth of a rule, said overall degree truth being determined by combining the degrees of truth of the different conditions of said rule, said degree of truth of a condition being equal to 1 when the condition is strictly verified and equal to 0 when the condition is considered non-verified, said controller having at least one determination circuit of said overall degree of truth (figure 4) and one determination circuit of said magnitudes of the output variables (figures 8 and 9) and being characterized in that said determination circuits of the overall degree of truth comprise:

- a plurality of distance determination circuits (5; 105a,105b) which each provide, at the output, a distance signal, the amplitude of which is zero when said condition is verified between said input variable (Iin) and said reference value (IA), and the amplitude of which is an increasing function of the absolute difference ($\Delta$I) between said input variable and said reference value when these two magnitudes (Iin,IA) do not verify said condition;

- a summation circuit by rule (27,36) realising the sum (Iout) of the amplitudes of said distance signals obtained for said rule; and

- at least one transformation circuit (7;107) receiving said sum supplied by said summation circuit and delivering a signal (Iweight) which equals 0 when said sum is greater than a given threshold value, equals 1 when said sum is at the minimum and assumes continuously increasing values between 0 and 1 when said sum varies between, respectively, said given threshold value and said minimum value.

2. Controller according to claim 1, characterized in that the amplitude of said distance signal supplied by each of said distance determination circuits (5; 105a,105b) is substantially a square-law function of the difference ($\Delta$I) between said input variable (Iin) and said reference value (IA) when these two magnitudes (Iin,IA) do not verify said condition.

3. Controller according to claim 1, characterized in that the amplitude of said distance signal supplied by each of said distance determination circuits (5; 105a,105b) is a substantially linear function of the absolute value of the difference ($\Delta$I) between said input variable (Iin) and said reference value (IA) when these two magnitudes (Iin,IA) do not verify said condition.

4. Controller according to one of the preceding claims, characterized in that it is formed of analog integrated circuits using CMOS technology.

5. Controller according to one of the preceding claims, characterized in that said relational operators are of the type : "equal to", "different from", "less than" or "greater than".

6. Controller according to claim 1, characterized in that said distance determination circuits comprise :

- a bias circuit (3;103) supplying a bias voltage; and

- a distance determination circuit (5;105,105b) having a current generator (9) supplying a reference current (IA) representative of said reference value, means for comparing the intensity of said reference current (IA) and the intensity of a current (Iin) representative of said input variable and to supply on the basis of this comparison a difference signal ($\Delta$I), and means (16, 18, 26, 28, 38) to deliver, in response to said difference signal ($\Delta$I) a signal which is an increasing function of the amplitude of said difference signal.

7. Controller according to claim 6, characterized in that said summation circuit has a line (27) connecting the outputs of the different distance determination circuits (105a,105b) with the output (36) of said summation circuit, and bringing to said output (36) of the summation circuit, a current (Iout) which is equal to the sum of the currents supplied by said distance determination circuits.

8. Controller according to claim 7, characterized in that said transformation circuit (7;107) has a current generator (40) supplying a current (Imax) representative of the value 1, said generator being connected both to the output (36) of said summation circuit of the rule and to the output of said transformation circuit via the intermediary of means having a diode effect (42).

9. Controller according to one of the preceding claims, characterized in that it is provided for the implementation of at least two behaviour rules and in that said output magnitudes (Vout) are determined by a weighting circuit which has a plurality of transconductance amplifiers (60, 61, 62), each of said amplifiers being associated with one of said behaviour rules, the inputs of each one of said amplifiers receiving, on the one hand, one of said predetermined values (VA) for said behaviour rule and, on the other hand, a signal (Iweight) which is representative of the overall degree of truth of said rule and which is supplied by one of said transformation circuits, the outputs of said amplifiers being connected together and supplying one of said output magnitudes (Vout).

# Fig.1

a)

$\mu_0(X)$  1

X = 0

-3     0     3     X

b)

$\mu_0(X)$  1

X = 0

X

c)

$\mu_0(X)$
1

X < 0

X

d)

1  $\mu_0(X)$

X > 0

X

Fig.2

Fig.3

# Fig.4

# Fig.6

$$I_K \left(1 + \frac{I_{in} - I_A}{4I_K}\right)^2$$

$$I_K \left(1 - \frac{I_{in} - I_A}{4I_K}\right)^2$$

## Fig. 5

Fig.7

EP 0 617 359 B1

polarisation

traitement entrée 1

traitement entrée 2

# Fig.8

# Fig.9

## Fig.10

## Fig.11

## Fig.12